Europäisches Patentamt

**European Patent Office**

Office européen des brevets

(11) Numéro de publication: **0 076 198**

**A1**

(12) # DEMANDE DE BREVET EUROPEEN

(21) Numéro de dépôt: **82401696.8**

(22) Date de dépôt: **20.09.82**

(51) Int. Cl.³: **F 16 L 3/20**
    F 16 F 7/04

(30) Priorité: **22.09.81 FR 8117852**

(43) Date de publication de la demande:
**06.04.83 Bulletin 83/14**

(84) Etats contractants désignés:
**DE GB IT SE**

(71) Demandeur: **INTERNATIONAL VIBRATION ENGINEERING**
**29 Route de Milly**
**F-91820 Boutigny-sur-Essonne(FR)**

(72) Inventeur: **Grasmück, Gilbert Jean**
**58 ter rue de la Libération**
**F-91770 Saint Brain(FR)**

(74) Mandataire: **Lemoine, Michel et al,**
**Cabinet Michel Lemoine 13 Boulevard des Batignolles**
**F-75008 Paris(FR)**

(54) Dispositif amortisseur antisismique.

(57) Le dispositif amortisseur antisismique comporte deux éléments mobiles l'un par rapport à l'autre et un ensemble vis (22), écrou (10) pour provoquer la rotation simultanée d'un élément rotatif (26) en cas de mouvement peu intense. En cas de mouvement intense, le décalage angulaire entre l'élément (26) et la vis (22) provoque, par des moyens de surfaces hélicoïdales réversibles (36, 37, 38), un freinage, avec un force multipliée, par des moyens de freinage (28, 29, 34). Application à l'amortissement antisismique dans les centrales nucléaires.

Fig.1

EP 0 076 198 A1

1

Dispositif amortisseur antisismique.
_____

La présente invention a trait à un dispositif anti-sismique amortisseur de déplacements mécaniques du type destiné à être inséré entre deux structures mobiles l'une par rapport à l'autre pour permettre un déplacement relatif de ces structures lors d'un mouvement peu intense, par exemple de faible accélération ou de faible vitesse, et au contraire freiner ce déplacement relatif, ou réduire sa vitesse en cas de mouvement d'accélération ou de vitesse importantes.

De tels dispositifs sont notamment utilisés comme dispositifs de sécurité anti-sismique dans des centrales thermiques ou nucléaires, notamment entre une structure telle qu'un réacteur et un équipement tel qu'une tuyauterie pour permettre un mouvement relatif à une faible vitesse ou faible accélération, par exemple sous l'effet des dilatations thermiques, et au contraire empêcher ou réduire un mouvement relatif de grande accélération, par exemple sous l'effet d'une secousse sismique.

Les dispositifs connus de ce type présentent en général un premier élément relié à l'une des structures, un deuxième élément relié à l'autre structure, le plus souvent des moyens pour transformer un mouvement en général rectiligne de l'un des éléments par rapport à l'autre en un mouvement de rotation, et des moyens pour empêcher, freiner ou limiter ce mouvement, notamment cette rotation, lorsque l'accélération, ou dans d'autres cas la vitesse, de ce mouvement tend à devenir trop grande.

Parmi ces dispositifs connus, un certain nombre utilise, pour freiner une pièce rotative ainsi entraînée par le mouvement de l'un des éléments, une autre pièce qui, lors d'une rotation provoquée par un mouvement peu intense, se trouve également entraînée mais qui, lors d'un mouvement plus intense, prend par rapport à la première pièce rotative un retard ou un décalage dû soit à son inertie plus grande, soit à des moyens de freinage sensibles à la vitesse ou à l'accélération, ce retard ou décalage étant utilisé pour provoquer l'actionnement de moyens de freinage s'opposant à la poursuite de la rotation de la première pièce et donc du mouvement de l'élément qui la porte par rapport à l'autre élément.

La réalisation de tels dispositifs est cependant délicate. En effet, en raison des forces ou accélérations considérables auxquelles le dispositif doit s'opposer, il est nécessaire d'obtenir une force de freinage extrêmement importante, et ceci de façon pratiquement immédiate. En même temps le dispositif doit être d'une très grande sensibilité afin d'empêcher, en pratique, un véritable déplacement.

Le brevet français 2.246.276 déposé le 30 septembre 1974 a déjà cherché à apporter une solution à ce problème et il décrit un dispositif dans lequel une pièce d'inertie est reliée à la pièce rotative, sensible aux mouvements de l'un des éléments, par un ressort hélicoïdal disposé autour et à faible distance d'une surface de friction de sorte qu'un retard ou décalage angulaire entre la masse d'inertie, qui peut être relativement faible, et la pièce rotative provoque une variation de diamètre du ressort dont les spires viennent s'appliquer contre la surface de friction et provoquent ainsi une amplification mécanique très élevée assurant un freinage intense.

3

Cependant un tel dispositif présente des inconvénients dans la pratique. Il est d'un réglage particulièrement difficile et demande, pour les ressorts, des tolérances de fabrication très sévères. D'autre part, le ressort doit être dimensionné de façon à pouvoir transmettre des efforts importants tout en étant d'une grande sensibilité pour éviter d'avoir à utiliser une masse d'inertie trop importante. Il en résulte que l'emploi pratique d'un tel dispositif dans des installations où l'on recherche à la fois une grande précision, une fiabilité exceptionnelle et un prix de revient économique, pose des problèmes considérables.

La présente invention a pour but de remédier à ces inconvénients en utilisant, pour assurer le freinage, l'amplification produite par un effet de rampe hélicoïdale.

On connaît déjà un amortisseur décrit dans le brevet des Etats-Unis d'Amérique 2.471.857 délivré le 31 mai 1949 et destiné à des applications aéronautiques, notamment l'amortissement des vibrations d'ailerons, dans lesquelles les forces agissant sur le dispositif sont extrêmement faibles si on les compare à celles surgissant dans des structures telles que des centrales nucléaires en cas de séisme. Le dispositif décrit dans ce brevet américain comprend deux éléments coulissant l'un par rapport à l'autre et dont l'un comprend une tige filetée qui, lors de son mouvement relatif, entraîne en rotation un écrou. Sur l'écrou, muni d'un filetage hélicoïdal externe, est vissé une pièce d'inertie qui, lorsque l'accélération de l'écrou est faible, tourne avec ce dernier mais qui, lorsque l'accélération s'accroît, prend du retard en rotation et va donc se déplacer axialement pour actionner des moyens de freinage.

Un tel dispositif présente cependant différents inconvénients. Tout d'abord, il est relativement compliqué et fragile. Il nécessite en particulier la présence de de deux jeux de surfaces de freinage, selon le sens de

4

déplacement axial de la pièce d'inertie, afin d'assurer un freinage quel que soit le sens de déplacement des deux éléments coulissants. Il est donc nécessaire de déterminer ces moyens de freinage avec une grande précision sans pour cela être certain d'éliminer tous risques d'asymétrie du freinage selon le sens du déplacement, ce qui peut conduire à un mauvais fonctionnement du dispositif.

Un objectif de l'invention est donc de remédier à ces inconvénients et de fournir un dispositif anti-sismique amortisseur de déplacements mécaniques permettant d'obtenir, avec une réversibilité parfaite et un encombrement particulièrement réduit, des forces de freinage extrêmement importantes, et ceci de façon simple, économique tout en présentant le degré de fiabilité voulu pour le fonctionnement dans des environnements d'accès difficile, voire impossible.

L'invention a pour objet un dispositif anti-sismique amortisseur de déplacements mécaniques comprenant deux éléments susceptibles d'être reliés à deux structures, des moyens pour transformer le mouvement relatif entre les deux éléments en un mouvement de rotation d'une pièce rotative, un élément rotatif susceptible d'être entraîné sensiblement en synchronisme par ladite pièce rotative lorsque celle-ci est soumise à un mouvement peu intense et muni de moyens provoquant un retard ou décalage dudit élément rotatif lorsque ladite pièce rotative tend à l'entraîner en raison d'un mouvement intense, et des moyens de freinage puissant de ladite pièce rotative, lesdits moyens de freinage puissant étant sensibles audit décalage ou retard, caractérisé en ce que ledit élément rotatif coopère avec des moyens de surfaces hélicoïdales réversibles de faible angle pour provoquer, en cas de décalage ou retard, un mouvement axial dans un seul sens d'une pièce mobile de freinage axialement adjacente, entraînée en synchronisme avec ladite pièce rotative et susceptible de coulisser axialement par rapport

5

à cette dernière pour coopérer avec des moyens de freinage et freiner ladite pièce rotative avec une force de friction multipliée.

Dans une forme de réalisation particulièrement préférée de l'invention, lesdits moyens de surfaces hélicoïdales de faible angle sont interposés entre ledit élément rotatif axialement immobile et ladite pièce mobile de freinage adjacente de façon que cette dernière soit repoussée en direction des moyens de freinage par le décalage angulaire entre ledit élément rotatif et ladite pièce mobile de freinage.

On peut ainsi obtenir un dispositif présentant une sensibilité extrêmement élevée dans lequel, contrairement à l'art antérieur, l'élément rotatif, par exemple un élément d'inertie, est axialement immobile de sorte que le mouvement de freinage est provoqué pratiquement sans aucun mouvement dudit élément, ce qui permet notamment d'utiliser des éléments d'inertie de masse importante et donc de très grande sensibilité.

Le faible angle desdites surfaces doit être supérieur à 1° si l'on prévoit des moyens de roulement et à 3° si les surfaces hélicoïdales sont en contact direct.

De façon avantageuse, ladite pièce de freinage est normalement repoussée axialement vers ledit élément rotatif par des moyens élastiques relativement faibles de sorte que, pour des mouvements peu intenses, l'élément rotatif se trouve entraîné en synchronisme avec la pièce rotative par l'intermédiaire de ladite pièce mobile de freinage, alors que lorsque le mouvement devient plus intense, la faible force desdits moyens élastiques est insuffisante à provoquer l'entraînement dudit élément rotatif.

Cependant, dans une autre forme de réalisation, lesdits moyens de surfaces hélicoïdales réversibles de faible angle peuvent être interposés entre ledit élément rotatif, cette fois axialement déplaçable par rapport à

6

l'organe rotatif, et un élément solidaire de l'organe
rotatif de façon à provoquer, en cas de décalage, et
par le biais desdits moyens de surfaces hélicoïdales,
un déplacement axial, toujours dans le même sens, dudit
élément rotatif, ce dernier transmettant l'effort de
déplacement, de préférence par l'intermédiaire d'un
palier ou roulement de butée, à ladite pièce mobile de
freinage en direction des moyens de freinage.

L'élément rotatif peut être avantageusement
réalisé sous forme d'élément d'inertie et peut être
réalisé de façon particulièrement simple sous forme d'un
disque ou d'une masse tournante d'inertie, dont la dimension et le poids peuvent être choisis dans de larges limites en fonction des caractéristiques particulières recherchées. En effet, dans le dispositif selon l'invention,
ledit élément rotatif n'est pas axialement mobile de
sorte qu'il en résulte non seulement une simplification
de structure, mais encore la suppression d'un lien
mécanique direct entre ledit élément rotatif et la pièce
rotative portés par l'un des deux éléments du dispositif.

En variante, l'élément rotatif peut être réalisé
sous forme d'un élément freiné avec une force de freinage
croissant en fonction de sa vitesse de rotation, par
exemple grâce à l'utilisation d'une graisse ou d'un autre
matériau visqueux. Dans ce cas, tant que l'élément rotatif
tend à être entraîné à une faible vitesse de rotation, la
force de freinage qui s'oppose à sa rotation est
insignifiante et aucun décalage n'apparaît, de sorte que
la pièce mobile de freinage n'est pas sollicitée. Par
contre, lorsque la vitesse s'accroît l'élément rotatif
est davantage freiné en rotation, ce qui provoque un
décalage entraînant le mouvement axial de la pièce de
freinage mobile et par conséquent le freinage extrêmement
énergique de celle-ci et de la pièce rotative dont elle
est solidaire ou avec laquelle elle tourne en synchronisme.

De façon particulièrement avantageuse, la pièce mobile de freinage peut être réalisée sous forme d'une mâchoire coopérant avec une autre mâchoire calée sur la pièce rotative, une bague de freinage fixe étant insérée entre lesdites deux mâchoires pour être serrée entre elles lorsque les deux mâchoires se rapprochent l'une de l'autre sous l'effet du décalage de l'élément rotatif. Dans cette forme de réalisation, ladite bague peut être axialement flottante tout en étant calée en rotation, par exemple par rapport au boîtier du dispositif ou à celui des éléments du dispositif qui ne porte pas la pièce rotative.

Cependant on comprend que d'autres moyens de freinage peuvent être utilisés, dont la mise en oeuvre est assurée par le mouvement axial de la pièce mobile de freinage.

D'autres avantages et caractéristiques de l'invention apparaîtront à la lecture de la description suivante faite à titre d'exemple non limitatif et se référant au dessins annexé dans lequel :

La figure 1 représente une vue schématique en demi-coupe longitudinale d'un dispositif selon l'invention.

La figure 2 représente une vue en coupe partielle de l'extrémité de l'un des éléments au niveau d'une rotule de montage sur un élément de structure.

La figure 3 représente une vue partielle de face d'une partie des moyens de surfaces hélicoïdales réversibles.

La figure 4 représente une vue en coupe au niveau des moyens de surfaces hélicoïdales entre l'élément rotatif et la pièce mobile de freinage.

En se référant au dessin, on voit un dispositif selon l'invention et qui comporte un premier élément 1 et un deuxième élément 2 destinés respectivement à être fixés à deux structures à amortir l'une par rapport à l'autre.

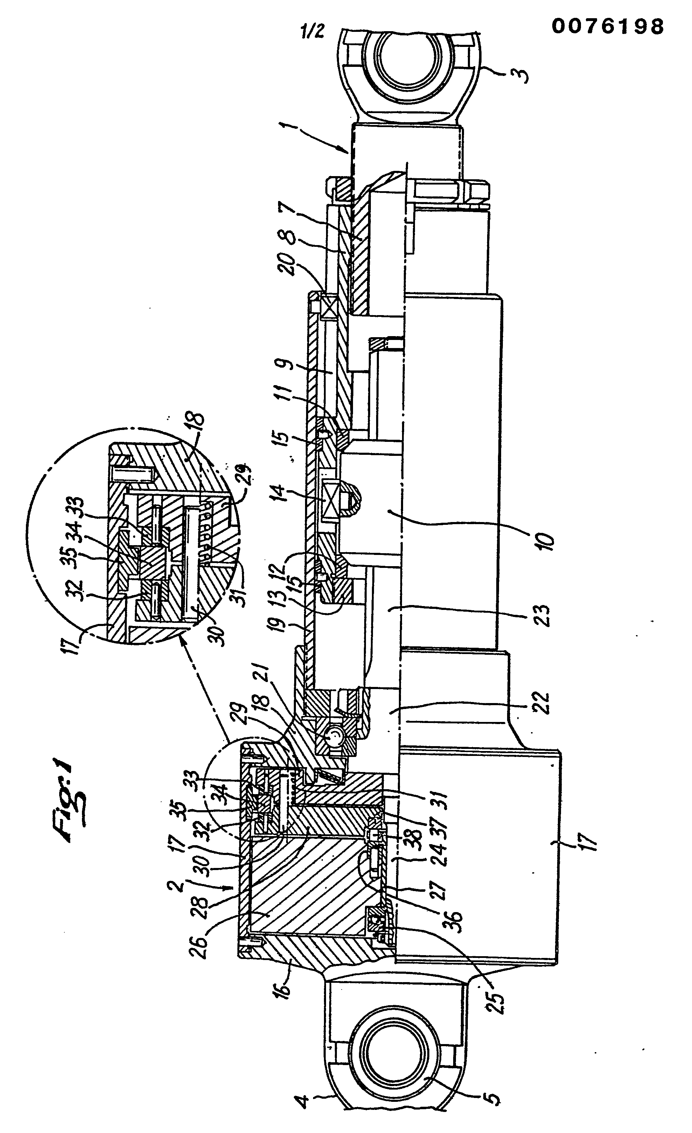

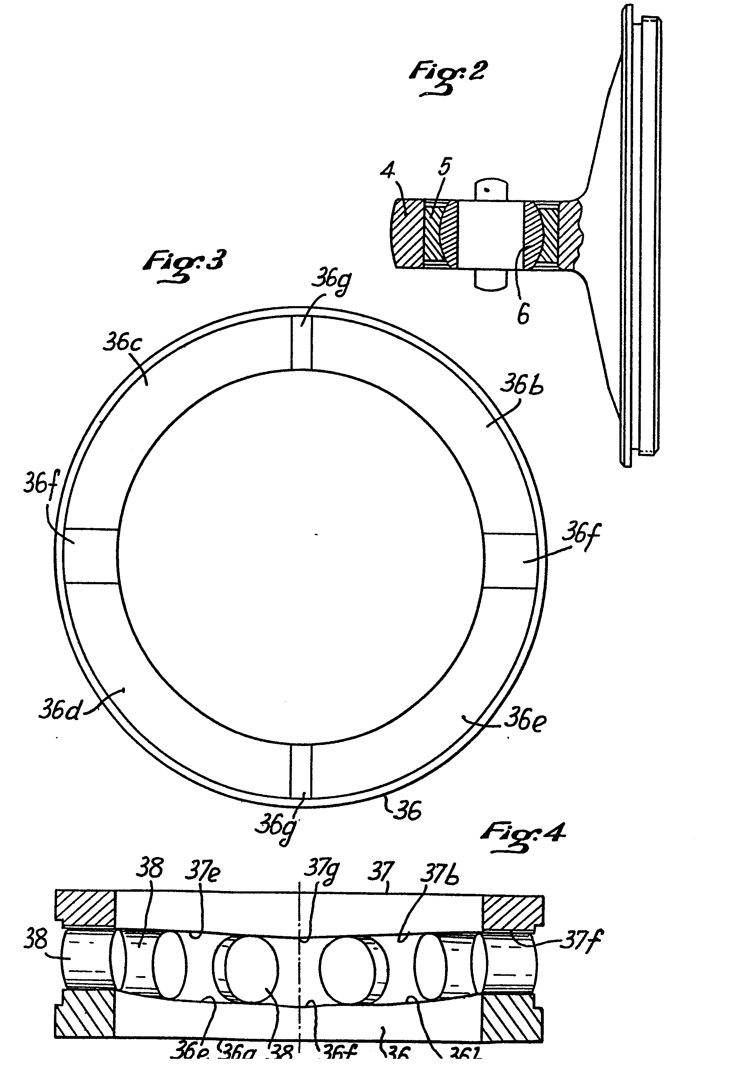

A cette fin, chacun des éléments comporte, à son extrémité libre, une patte 3, respectivement 4 pour la fixation par rotule sur la structure correspondante. On voit par exemple sur la figure 2 que la patte présente un évidement intérieur dans lequel est monté un palier femelle de rotule 5 à l'intérieur duquel est articulée la rotule 6 proprement dite.

L'élément 1 comporte en fait une première pièce 7 d'un seul tenant avec la patte 3, cette pièce présentant une forme extérieure cylindrique sur laquelle est bloquée, par vissage ou frettage, une pièce sensiblement tubulaire 8 munie d'une ou plusieurs rainures longitudinales périphériques 9 et présentant, à son intérieur et vers l'extrémité opposée à la patte 3, un écrou intérieurement fileté 10 rendu axialement solidaire de l'élément 1 par deux portées 11, respectivement 12 formées par des bagues chanfreinées convenables et maintenues bloquées en place de part et d'autre de l'écrou 10 par une bague filetée 13 vissée dans la pièce 8. En outre, l'écrou 10 est solidaire en rotation de la pièce 8, grâce à des moyens de clavetage 14 coopérant avec des rainures convenables de la pièce 8.

Cette dernière présente encore, à sa périphérie, deux patins annulaires 15 écartés l'un de l'autre et qui permettent à ladite pièce 8, et donc à l'élément 1, d'être guidés et de coulisser à l'intérieur de l'élément 2.

Ce dernier présente la forme d'un boîtier obturé à son extrémité postérieure par une plaque ou flasque 16 solidaire de la patte 4 et fixé à l'extrémité ouverte d'une partie tubulaire de boîtier 17 de grand diamètre dont l'autre extrémité est rendue solidaire d'une pièce de raccordement 18 dont la partie de diamètre réduit reçoit par vissage et blocage une pièce tubulaire 19 intérieurement alésée et dans laquelle l'élément 1 peut coulisser en étant guidé par ses patins 15. L'extrémité de la pièce 19, vers la patte 3, présente une ou plusieurs clavettes 20 coopérant avec la rainure longitudinale périphérique correspondante 9 de l'élément 1. On comprend donc que les éléments 1 et 2 peuvent ainsi se déplacer l'un par rapport à l'autre en translation mais sont immobilisés l'un par rapport à l'autre en rotation.

Le vissage de la pièce tubulaire 19 dans la pièce de raccordement 18 permet de bloquer, à l'intérieur de cette dernière, un palier ou roulement à billes 21 permettant le guidage d'une pièce rotative désignée dans son ensemble par 22. La partie élargie de cette pièce 22 située au regard du roulement 21 se prolonge, vers l'élément 1, par une tige extérieurement filetée 23 vissée dans l'écrou 10. En conséquence, du fait que la tige 23 est axialement calée par rapport à l'élément 2, tout mouvement de translation de celui-ci par rapport à l'élément 1 et donc par rapport à l'écrou 10 provoque une rotation correspondante de la pièce 22.

Du côté opposé à la tige 23, la pièce 22 se prolonge par une tige de diamètre réduit 24 dont l'extrémité est située à une certaine distance de la plaque de fermeture 16, ladite tige 24 portant un palier ou roulement à billes 25 supportant de façon rotative un élément rotatif d'inertie 26 présentant la forme d'un disque épais pouvant tourner à l'intérieur du boîtier formé par les pièces 16, 17 et 18 de l'élément 2. De façon avantageuse, une bague autolubrifiante 27 peut être interposée entre l'élément rotatif 26 et la tige 24 de la pièce rotative 22.

En face de l'élément rotatif 26 se trouve disposée une pièce en forme de disque 28 située à faible distance d'une seconde pièce en forme de disque 29, elle-même axialement et angulairement calée sur la pièce rotative 22. La pièce mobile 28 est entraînée en rotation par la pièce 29, angulairement solidaire de la pièce rotative 22 grâce à des pions 30 portés parallèlement à l'axe de la tige 24 par la pièce 29, lesdits pions coulissant dans des orifices correspondants de la pièce mobile 28, laquelle peut ainsi se déplacer axialement par rapport à la pièce 29 et à l'élément 26 mais en étant solidaire en rotation de la pièce rotative 22. De faibles ressorts 31 tendent normalement à repousser la pièce mobile 28 à l'écart de la pièce 29 et à proximité de l'élément rotatif 26. Pour la commodité du dessin, ces ressorts 31 ont été dessinés dans les mêmes logements que les pions 30 mais on comprend que les ressorts 31 et les pions 30 sont en fait angulairement espacés de façon alternée.

Dans des dégagements périphériques se faisant face des pièces 28 et 29 sont disposées deux bagues de friction 32, 33 solidaires respectivement des pièces 28 et 29. Entre ces bagues de friction se trouve montée une bague de friction flottante 34 munie d'une denture radiale périphérique engrenant dans une denture radiale interne d'une autre bague intérieurement crantée 35 axialement et angulairement solidaire de la pièce 17 de l'élément 2. On comprend donc que la bague de friction 34 peut se déplacer axialement par rapport à la bague 35 et donc à l'élément 2 mais est immobilisée angulairement.

La pièce mobile de freinage 28 et la pièce 29 forment donc deux mâchoires de freinage solidaires en rotation de la pièce rotative 22 pour serrer entre elles la bague de friction fixe 35, les ressorts 31 ayant tendance à s'opposer à un resserrement des mâchoires sur la bague 34 en éloignant la pièce 28 de la pièce axialement fixe 29.

Entre l'élément rotatif 26 et la pièce de freinage 28, sont interposés les moyens de surfaces hélicoïdales réversibles. Ils comprennent , au voisinage de la partie 24 de l'organe rotatif, deux bagues se faisant face, l'une des bagues, 36, étant solidaire de l'élément 26 alors que l'autre bague 37, est solidaire de la pièce 28. Entre les deux bagues sont disposés un certain nombre de galets ou rouleaux 38 maintenus en place entre les deux bagues grâce à une cage convenable. En se référant plus particulièrement aux figures 3 et 4, on voit, sur la figure 3, la bague 36 dont la face 36a tournée vers l'élément 26 est plane alors que la face opposée présente quatre rampes hélicoïdales de sens alternés 36b, 36c, 36d et 36e, séparées en leurs points convergents les plus bas, c'est-à-dire où la bague présente la plus faible épaisseur, par des fonds légèrement creusés 36f diamétralement opposés et, en leurs extrémités convergentes les plus hautes, par des sommets légèrement aplatis 36g également diamétralement opposés. La bague présente ainsi deux axes de symétrie perpendiculaires, l'un reliant les deux fonds 36f et l'autre les deux sommets 36g.

La bague 37 est en fait exactement identique à la bague 36 mais est montée dans la pièce de freinage 28 de façon que, lorsque le dispositif se trouve dans son état d'équilibre, les fonds 36f de l'une des bagues se trouvent opposés aux sommets 37g de l'autre bague et vice versa.

Sur la figure 4, on a également représenté schématiquement les rouleaux 38, à savoir trois rouleaux par surface hélicoïdale, ce qui fait douze rouleaux en tout, ces rouleaux étant maintenus équidistants par une cage classique, représentée schématiquement sur la figure 1. On comprend donc qu'en cas de rotation relative de l'une des bagues 36, 37 par rapport à l'autre, à partir de la position de repos représentée sur la figure 4, les sommets tels que 37g ne vont plus coïncider avec les fonds tels que 36f, et vice versa, et la présence des rouleaux obligera donc les deux bagues à s'éloigner axialement l'une de l'autre, et ceci quel que soit le sens de cette rotation relative. Ce mouvement est donc réversible dans les deux sens.

Si maintenant, par exemple en raison de phénomènes de dilatation thermique des structures entre lesquelles le dispositif selon l'invention est interposé, l'élément 1 se met à coulisser avec une faible accélération par rapport à l'élément 2, ce mouvement va provoquer la mise en rotation de la tige 23 et donc de la pièce rotative 22 selon un mouvement de rotation de faible accélération. La pièce mobile 28 est entraînée en synchronisme en rotation par l'intermédiaire de la pièce 29 et des pions 30. En raison de la poussée des faibles ressorts 31, la rotation de la pièce mobile 28 va provoquer par l'intermédiaire des rouleaux 38, la rotation pratiquement synchrone de l'élément rotatif 26 et ceci, tant que la force d'inertie qui s'oppose à la mise en rotation de l'élément 26 est inférieure à la force d'entraînement en rotation assurée par les ressorts 31 par l'intermédiaire des surfaces hélicoïdales concernées, par exemple 36b, 36d, 37b, 37d, et des rouleaux 38. Ainsi le dispositif n'oppose aucune résistance à des mouvements de faible accélération qui peuvent se poursuivre indéfiniment dans la limite de l'amplitude permise par le dimensionnement du dispositif.

Si au contraire, par exemple à l'occasion d'une secousse sismique, le mouvement relatif entre les éléments 1 et 2 se fait avec une accélération importante, l'élément d'inertie 26 va tendre à rester immobile en rotation par rapport à la pièce mobile 28 entraînée par la rotation de la pièce rotative 22, l'action des ressorts 31 étant insuffisante cette fois pour provoquer la mise en rotation synchrone de l'élément 26. Celui-ci subit un décalage angulaire par rapport à la pièce mobile 28, et, sous l'effet de rampe hélicoïdale des surfaces hélicoïdales avec interposition des rouleaux 38, la pièce mobile 28, qui ne présente qu'une faible inertie, se trouve repoussée axialement en direction de la pièce 29 en comprimant les ressorts 31. Ce faisant, la bague de friction angulairement immobile 34 est prise entre les bagues de friction 32, 33 des mâchoires 28, 29 et un effort de friction extrêmement énergique est appliqué, provoquant un freinage extrêmement énergique amplifié par l'effet de rampe, cet effort de freinage freinant efficacement la rotation des éléments 28 et 29 et donc de la pièce 22 de sorte que le mouvement relatif entre les éléments 1 et 2 ne peut se poursuivre que très lentement.

On comprend qu'en choisissant convenablement les dimensions des différentes pièces ainsi que leur écartement, on peut obtenir une force de freinage extrêmement amplifiée intervenant pratiquement dès le début d'un mouvement de forte accélération de sorte que dans la pratique, en cas de tremblement sismique, il n'existe qu'un mouvement imperceptible et presque nul entre les éléments 1 et 2 et donc les structures qu'ils relient.

Il va de soi que les surfaces hélicoïdales réversibles représentées pourraient être réalisées de toute façon accessible à l'homme de l'art ; étant bien entendu que, dans tous les cas, la rampe hélicoïdale ou sensiblement hélicoïdale obtenue doit avoir un angle suffisamment faible pour provoquer une amplification extrêmement importante de la force de friction au niveau des mâchoires de friction.

On comprend aussi que l'élément d'inertie rotatif 26 pourrait être remplacé par un élément sensible à un freinage pratiquement nul aux faibles vitesses de rotation mais croissant lorsque la vitesse de rotation augmente, par exemple en interposant entre l'élément 26, qui dans ce cas pourrait être allégé ou non, et la pièce 17, une graisse de viscosité convenable. On pourrait ainsi obtenir un dispositif sensible non pas à l'accélération mais à la vitesse ou encore un dispositif mixte sensible d'une part aux accélérations et d'autre part aux vitesses.

Dans une autre forme de réalisation, les moyens de surfaces hélicoïdales réversibles de faible angle, tels que constitués par exemple par les bagues 36, 37 et galets 38, pourraient être interposés non plus entre l'élément rotatif d'inertie 26 et la pièce de freinage 28, mais entre ledit élément rotatif 26 et l'extrémité de gauche de la partie 24 de la pièce rotative. L'élément rotatif 26 serait alors monté de façon à pouvoir glisser librement en direction axiale sur la pièce 27 par rapport à la partie 24 de la pièce rotative 22 tout en restant évidemment également libre de tourner par rapport à cette pièce 22. Entre l'élément 26 et la pièce de freinage 28 serait alors interposé un palier ou roulement de butée susceptible de transmettre les efforts axiaux, par exemple dans l'emplacement occupé sur la figure 1 par les moyens 36, 37, 38. En d'autres termes, les positions du roulement à billes 25 et des moyens de surfaces hélicoïdales 36, 37, 38 seraient interverties, l'élément rotatif 26 étant autorisé à coulisser sur la pièce 27.

On comprend que dans une telle forme de réalisation, si un décalage angulaire se produit entre la pièce rotative 22 et l'élément rotatif 26, ce décalage provoquera la mise en oeuvre des moyens de surfaces hélicoïdales réversibles de faible angle qui provoqueront alors une translation axiale de la pièce 26 vers la droite de la figure 1, c'est-à-dire en direction de la pièce de freinage 28, laquelle serait alors poussée axialement par l'élément 26 vers la droite, provoquant la mise en oeuvre des moyens de freinage 32, 33 et 34.

Bien que l'invention ait été décrite à propos d'une forme de réalisation particulière, il est bien entendu qu'elle n'y est nullement limitée et qu'on peut lui apporter diverses modifications de forme sans pour cela s'éloigner ni de son cadre ni de son esprit.

Ainsi, par exemple, les moyens de freinage 28, 29, 34 pourraient être multipliés sous forme d'un empilage axial.

15

REVENDICATIONS

1. Dispositif anti-sismique amortisseur de déplacements mécaniques, comprenant deux éléments susceptibles d'être reliés à deux structures, des moyens pour transformer le mouvement relatif entre les deux éléments en un mouvement de rotation d'une pièce rotative, un élément rotatif susceptible d'être entraîné sensiblement en synchronisme par ladite pièce rotative lorsque celle-ci est soumise à un mouvement peu intense, et muni de moyens provoquant un retard ou décalage dudit élément rotatif lorsque ladite pièce rotative tend à l'entraîner en raison d'un mouvement intense, et des moyens de freinage puissants de ladite pièce rotative sensibles audit décalage ou retard, caractérisé en ce que ledit élément rotatif (26) coopère avec des moyens de surfaces hélicoïdales réversibles de faible angle (36,37,38) pour provoquer en cas de décalage ou retard un mouvement axial dans un seul sens d'une pièce mobile de freinage (28) axialement adjacente, entraînée en synchronisme avec ladite pièce rotative (22) et susceptible de coulisser axialement par rapport à cette dernière pour coopérer avec des moyens de freinage (32,33,34) et freiner ladite pièce rotative (22) avec une force de friction multipliée.

2. Dispositif selon la revendication 1, caractérisé en ce que lesdits moyens de surface hélicoïdales de faible angle (36,37,38) sont interposés entre ledit élément rotatif (26) axialement immobile et ladite pièce mobile de freinage (28) adjacente de façon que cette dernière soit repoussée en direction desdits moyens de freinage (32,33,34) par le décalage angulaire entre ledit élément rotatif (26) et ladite pièce mobile de freinage (28).

3. Dispositif selon la revendication 1, caractérisé en ce que les moyens de surfaces hélicoïdales réversibles de faible angle sont interposés entre ledit élément rotatif axialement déplaçable par rapport à l'organe rotatif, et un élément solidaire de l'organe rotatif de façon à provoquer en cas de décalage, et par le biais desdits moyens de surfaces hélicoïdales, un déplacement axial toujours dans le même sens dudit élément rotatif, ce dernier transmettant l'effort de déplacement de ladite pièce mobile de freinage en direction des moyens de freinage.

4. Dispositif selon l'une quelconque des revendications 1 à 3, caractérisé en ce que lesdits moyens de surfaces hélicoïdales de faible pas comportent deux bagues (36,37) présentant un nombre égal de rampes ascendantes et de rampes descendantes, une rampe ascendante étant reliée par un sommet à une rampe descendante et une rampe descendante étant raccordée par un fond à une rampe ascendante, les deux rampes étant, au repos, angulairement décalées l'une par rapport à l'autre pour que les sommets de l'une soient en face des fonds de l'autre et vice versa.

5. Dispositif selon la revendication 4, caractérisé en ce qu'entre les rampes sont prévus des galets (38) maintenus en place par une cage.

6. Dispositif selon l'une des revendications 4 et 5, caractérisé en ce que lesdits fonds (36f) sont légèrement creusés.

7. Dispositif selon l'une des revendications 1 à 6, caractérisé en ce que le faible angle desdits moyens de surfaces hélicoïdales est au moins égal à 1° lorsque entre lesdites surfaces hélicoïdales (36,37) sont interposés des moyens de roulement (38) et au moins égal à 3° lorsque lesdites surfaces sont en contact direct.

8. Dispositif selon l'une quelconque des revendications 1 à 7, caractérisé en ce que ladite pièce de freinage (28) est repoussée axialement vers ledit élément rotatif (26) par des moyens élastiques relativement faibles (31) de sorte que, pour les mouvements peu intenses, l'élément rotatif se trouve entraîné en synchronisme avec ladite pièce rotative.

9. Dispositif selon l'une des revendications 1 à 8, caractérisé en ce que l'élément rotatif (26) est réalisé sous forme d'élément d'inertie.

10. Dispositif selon l'une quelconque des revendications 1 à 9, caractérisé en ce que ledit élément rotatif est réalisé sous forme d'un élément freiné avec une force de freinage croissant en fonction de sa vitesse de rotation.

11. Dispositif selon l'une quelconque des revendications 1 à 10, caractérisé en ce que la pièce mobile de freinage (28) coopère avec une autre pièce (29) calée sur la pièce rotative (22), une bague de freinage angulairement fixe (34) étant serrée entre des mâchoires (32,33) desdites deux pièces lorsque celles-ci se rapprochent l'une de l'autre sous l'effet du décalage de l'élément rotatif (26).

12. Dispositif selon la revendication 11, caractérisé par le fait que ladite bague (34) est axialement flottante tout en étant calée en rotation.

13. Dispositif selon l'une quelconque des revendications 1 à 12, caractérisé en ce que l'un des éléments (1) est monté coulissant dans l'autre élément (2), l'un des éléments portant un écrou angulairement fixe par rapport à lui (10) dans le filetage duquel est vissée une tige filetée (23) faisant partie de ladite pièce mobile (22), laquelle se poursuit, à l'opposé de ladite tige, par une seconde tige (24) supportant de façon librement rotative ledit élément rotatif (26), ladite pièce rotative (22) étant solidaire d'une pièce (29) calée sur elle et entraînant par l'intermédiaire de pions de guidage (30) ladite pièce mobile de freinage (28) susceptible de coulisser axialement par rapport à ladite pièce rotative (22), ladite pièce de freinage (28) étant insérée entre ladite pièce calée (29) et ledit élément rotatif (26), ladite bague de friction (34) étant intercalée entre la pièce calée (29) et ladite pièce mobile de freinage (28).

Fig.1

0076198

2/2

Fig. 2

Fig. 3

Fig. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | F 16 L    3/20 |
| X | US-A-4 253 551  (CALABRESE) *Colonne 12, lignes 17-50; figure 5* | 1,2,8 | F 16 F    7/04 |
| | --- | | |
| A | US-A-1 774 094  (GULECK) *Page 2, lignes 27-78; figures* | 2-5,7 | |
| | --- | | |
| A | FR-A-2 404 771  (KLEMAITIS) | | |
| | ----- | | |

**DOMAINES TECHNIQUES RECHERCHES (Int. Cl. ³)**

F 16 L
F 16 F

Le présent rapport de recherche a été établi pour toutes les revendications

| Lieu de la recherche LA HAYE | Date d'achèvement de la recherche 08-12-1982 | Examinateur HUBEAU M.G. |
|---|---|---|